**Europäisches Patentamt**

**European Patent Office**

**Office européen des brevets**

(19)

(11) Veröffentlichungsnummer : **0 372 351 B1**

(12) ## EUROPÄISCHE PATENTSCHRIFT

(45) Veröffentlichungstag der Patentschrift :
**12.08.92 Patentblatt 92/33**

(51) Int. Cl.⁵ : **B01D 71/02,** // B01D39/20,
B01D69/10, C04B41/87

(21) Anmeldenummer : **89121869.5**

(22) Anmeldetag : **27.11.89**

(54) **Verfahren zum Herstellen eines keramischen Filterelementes.**

(30) Priorität : **29.11.88 DE 3840137**

(43) Veröffentlichungstag der Anmeldung :
**13.06.90 Patentblatt 90/24**

(45) Bekanntmachung des Hinweises auf die
Patenterteilung :
**12.08.92 Patentblatt 92/33**

(84) Benannte Vertragsstaaten :
**AT BE CH DE ES FR GB IT LI NL SE**

(56) Entgegenhaltungen :
**EP-A- 0 095 297**
**DE-A- 2 035 371**

(56) Entgegenhaltungen :
**FR-A- 2 179 640**
**FR-A- 2 306 001**
**FR-A- 2 466 269**
**FR-A- 2 527 092**
**US-A- 3 601 159**

(73) Patentinhaber : **Stora Feldmühle**
**Aktiengesellschaft**
**Feldmühleplatz 1**
**W-4000 Düsseldorf 11 (DE)**

(72) Erfinder : **Burger, Wolfgang, Dr. Dipl.-Chem.**
**Laichleweg 22**
**W-7314 Wernau (DE)**
Erfinder : **Comans, Hans-Jürgen**
**Grundend 15**
**W-4150 Krefeld (DE)**

EP 0 372 351 B1

## Beschreibung

Die Erfindung betrifft ein keramisches Filterelement nach dem Oberbegriff des Anspruches 1.

Keramische Filterlemente und deren Herstellung sind bekannt.

Nach der DE-C- 2359505 sind derartige Elemente aus einer keramischen Stützschicht und einer darauf angeordneten porösen keramischen Membranschicht aufgebaut. Die keramische Membranschicht kann mittels Zerstäubung eines trockenen Pulvers oder einer wässrigen Pulverdispersion auf der Stützschicht oder mittels Zentrifugieren einer keramischen Pulveraufschlämmung auf eine Stützschicht oder mittels Schlickergießen einer keramischen Pulverdispersion auf eine Stützschicht, Trocknen und anschließendes Sintern hergestellt werden.

Ein weiteres verfahren zur Herstellung eines keramischen Filterelementes wird in der europäischen Anmeldung EP-A- 0228631 beschrieben.

Keramische Filterelemente, insbesondere keramische Filterrohre werden danach hergestellt, indem eine erste plastische Masse aus keramischem Pulver und Bindemittel in einer isostatischen Preßvorrichtung zu einem grünen Rohrkörper verpreßt wird. Innerhalb des Rohrkörpers wird eine weitere plastische Masse angeordnet und mit Hilfe eines Dornes und eines elastischen Balges an die Innenwandung des grünen Rohrkörpers gepreßt, wobei die Korngröße dieser Masse von der der ersten verschieden ist, zwecks Erhalt unterschiedlicher Porositäten des Tragkörpers und der oder den Filterfunktionsschichten. Der so erhaltene Grünkörper wird dann bei Sinterbedingungen gebrannt, die für Keramikrohre üblich sind.

Ebenfalls ist es nach der DE-A- 35 41 444 bekannt, Tiefenfilter, insbesondere Partikelfilter für Gase, aus Ausgangsmaterialien unterschiedlicher Größe herzustellen, indem das pulverförmige Material zu einem Schlicker angerührt wird, der Schlicker in einem Stützkörper aus Schaum- oder Schwammstoff aufgenommen, darin getrocknet und anschließend gebrannt wird. Sollen Körper unterschiedlicher Porosität hergestellt werden, so können Stutzkörper aus Schaumteilen mit unterschiedlicher Porengröße herangezogen werden. Zur Herstellung von rohrförmigen Filtern können die Schaumteile in noch feuchtem Zustand über einen Dorn aufgewickelt werden.

Die bisher bekannten Verfahren zur Herstellung von keramischen Filterelementen sind mit Nachteilen behaftet. So können bei der Erzeugung der eigentlichen Filtermembran auf dem Stützkörper deutliche Unterschiede in der Schichtdicke auftreten, wenn die Membran mittels der Schlickertechnik oder der Sedimentationstechnik auf dem Stützkörper angebracht wird, wobei die unterschiedliche Schichtdicke sich in unterschiedlichen Filtrationsraten äußert. Weist der Stützkörper einzelne offene große Poren auf, kann sich dort überhaupt keine Trägerschicht ausbilden, da das feine Pulver der für die Membranschicht vorgesehenen Schlickerdispersion durch die großen Poren in das Innere des Stützkörpers eindringt, wobei an dieser Stelle dann eine veränderte Filtrationsrate resultiert.

Eine weitere Fehlermöglichkeit bei der Schlicker- oder Zentrifugentechnik besteht darin, daß beim Antrocknen der so aufgebrachten eigentlichen Membranschicht Trockenrisse auftreten können, die später in der Schicht Löcher ergeben und somit eine einheitliche geschlossene Filtermembran verhindern.

Ein weiterer Nachteil der bisherigen Verfahren besteht darin, daß es nur über äußerst aufwendige Schritte gelingt, Membranschichten aus mehreren einzelnen Membranen mit abgestufter Porosität und Porengröße zu erzeugen. Sowohl bei der Zerstäubungstechnik, der Sedimentationstechnik wie auch beim Schlickergießen ist eine Mischung der unterschiedlich großen Partikel der Pulver für die herzustellende Membran nicht zu vermeiden.

Ebenso ist ein weiterer Nachteil der bisher bekannten Verfahren die zeitaufwendige Herstellung der Membranschichten.

Als besonders großer Nachteil der bisher bekannten Verfahren, insbesondere EP-A-228 631, wurde erkannt, daß bei derartigen Filterelementen eine Optimierung der Sintertemperatur nicht möglich ist. Um eine hohe mechanische Festigkeit des gesinterten Filterelementes zu erreichen, wie sie z. B. für Flüssigkeitsfilter erforderlich ist, sind hohe Sintertemperaturen erforderlich. Diese bewirken jedoch in der auf dem Stützkörper befindlichen Filter-oder Membranschicht ein unerwünschtes Kornwachstum, so daß die mit Hilfe der Feinheit des Ausgangspulvers angestrebte Porengröße nachteilig verändert wird. Wird nun die Sintertemperatur herabgesetzt, gelingt es zwar, die angestrebte Porengröße der Filterschicht aufrecht zu erhalten, jedoch muß eine niedrigere bis ungenügende Festigkeit des Stützkörpers in Kauf genommen werden, so daß das Filterelement bei hohen mechanischen Beanspruchungen versagt.

Die Herstellung von Folien aus keramischen sinterfähigen Pulvern ist allgemein bekannt und wird z. B. in der EP-A- 0 073 854 für Folien beliebiger Schichtdicke beschrieben.

Es ist daher Aufgabe der Erfindung, die bisher bekannten Nachteile zu vermeiden und ein Verfahren zur Verfügung zu stellen, mit dem Filterelemente hergestellt werden können, die eine Filtermembran mit konstanter Filtrationsrate und scharfem Trennvermögen ergeben und gleichzeitig eine hohe mechanische Belastbarkeit aufweisen.

Eine weitere Aufgabe der Erfindung ist eine vereinfachte Herstellungsmethode derartiger, verbesserter Filterelemente.

Die Aufgabe wird durch den kennzeichnenden Teil des Anspruches 1 und die darauf zurückbezogenen Unteransprüche 2 bis 14 gelöst.

Gemäß dem erfinderischen Verfahren wird zunächst ein gesinterter keramischer poröser Stützkörper hergestellt und auf diesem eine oder mehrere Filterschichten angeordnet, wobei mindestens eine Folie aus keramischem sinterfähigem Pulver und temporären Bindemitteln mit dem Stützkörper zunächst mechanisch verbunden und anschließend nach Ausheizung der temporären Bindemittel mittels Sinterung zu einem Filterelement verbunden wird.

Der poröse Stützkörper wird vorzugsweise aus einer Pulvermischung von 70 bis 90 Gew.% Schmelzkorund mit einer mittleren Korngröße von 10 bis 30 $\mu$m und 10 bis 30 Gew.% reaktiver Tonerde mit einer mittleren Korngröße von 0,5 bis 2,0 $\mu$m und einem organischen Versatz als temporärer Binder mittels Extrudieren oder anderer Formgebung und anschließendem Sintern bei einer Temperatur von 1800 bis 2000 im Vakuum oder unter Schutzgasatmosphäre bei einer Haltezeit von 2 bis 8 h hergestellt.

Durch das Extrudieren kann die Form des Stützkörpers beeinflußt werden. Es ist möglich plattenförmige, strangförmige oder rohrförmige Stützkörper mittels der Extrudiertechnik oder Preßtechnik herzustellen. Als temporäre Zusätze für den organischen Versatz haben sich folgende Mittel bzw. Mischungen daraus bewährt: Polyäthylenglykol, Methylcellulose, Paraffinöl und ein Tensid. Die Extrusion der Stützkörper kann aus wässrigen Massen wie auch aus Massen mit Zusatz von organischen nicht wasserlöslichen Zusätzen erfolgen. Nach der Extrusion der Massen erfolgt zunächst eine Trocknung des extrudierten Stützkörpers und anschließend die Sinterung im Vakuum oder unter Schutzgasatmophäre.

Die Einstellung der Porosität des Stützkörpers ist durch Wahl der mittleren Korngröße der Ausgangspulvermischung, durch die Extrusions- und Sinterbedingungen oder durch den Zusatz fester ausbrennbarer organischer Substanzen und/oder Ammoniumkarbonat wählbar.

Für die herzustellende keramische Folie werden auf den Anwendungszweck abgestimmte sinterfähige Pulver, wie Vorprodukte von reaktiver Tonerde, diese selbst, $ZrO_2$, $MgO$, $SiO_2$, Aluminiumtitanat, Mullit, Cordierit, Kaolin oder Mischungen daraus, eingesetzt.

Vorzugsweise wird als Pulver eine reaktive Tonerde mit einer mittleren Korngröße von 0,01 bis 2 $\mu$m mit einem organischen Versatz, der Polyvinylalkohol, Polyäthylenglykol, Trichloräthylen, Fischöl und Ethanol enthält, vermischt und anschließend zu einer Folie mit einer Dicke von ca. 20 bis 200 $\mu$m gemäß Anspruch 5 verarbeitet.

Das Auswalzen der Folie wird bei Raumtemperatur, vorzugsweise aber bei erhöhter Temperatur, durchgeführt.

Vorteilhafterweise wird die hergestellte Folie bis zu einem Trockengehalt von 40 bis 80 Gew.% entwässert und dann in noch feuchtem Zustand mit dem Stützkörper in Verbindung gebracht.

Eine weitere Möglichkeit zur Herstellung einer keramischen ungesinterten Folie besteht darin, daß eine mit einem Kunststofflatexbinder versetzte wässrige Pulvermischung mittels Rakel gemäß der Papierstreichtechnik auf ein dünnes Trägerpapier aufgetragen und anschließend getrocknet wird.

Die Verbindung der keramischen Folie mit dem Stützkörper erfolgt vorzugsweise bei plattenförmigen Stützkörpern mittels Walzen oder Plattenpressen oder isostatischem Pressen und anschließendem Sintern.

Eine weitere bevorzugte Verbindungsmethode der Folie mit dem Stützkörper besteht bei rohrförmigen Stützkörpern darin, daß die Folie zunächst plastifiziert wird, zum Beispiel durch Erwärmen oder Befeuchten und dann um den Stützkörper herum gewickelt wird.

Zur Verbesserung der Verbindung der so hergestellten Folie mit dem Stützkörper kann ein organischer oder anorganischer Kleber verwendet werden, der entweder direkt auf den Stützkörper aufgebracht wird oder aber bereits in der feuchten Folie enthalten ist und bei dem nachfogenden Sinterverfahren entweder durch Auheizen entfernt wird oder aber sich mit dem Keramikpulver zu einer keramischen Verbindung umsetzt.

Soll die Filtermembran im Innern des rohrförmigen Stützkörpers angeordnet werden, dann wird die Folie zunächst plastifiziert, auf einen expandierbaren Dorn aufgewickelt, bis der innere Durchmesser erreicht ist, in den Stützkörper eingeführt und mittels Expandieren des Dorns an die innere Oberfläche des Stützkörpers angepreßt. Bei beiden Verfahren wird anschließend der mit der Folie belegte Stützkörper dem Sintervorgang zur festen Verbindung unterzogen.

Ein weiteres bevorzugtes Herstellungsverfahren besteht darin, daß auf den Stützkörpern mittels Pressen oder Umwickeln mehrere Folien angeordnet werden, die aus Keramikpulver unterschiedlicher Korngröße bestehen. Sollen mehrere Folien angeordnet werden, dann wird vorzugsweise die Folie aus dem gröberen Keramikpulver als erste auf dem Stützkörper angebracht und darüber die Folien mit jeweils dem geringeren Korngrößendurchmesser des Keramikpulvers. Damit ist die Herstellung einer mehrschichtigen Membran mit

EP 0 372 351 B1

abgestufter Porengröße in einem Arbeitsgang ermöglicht.

Die Porengröße der Filtermembran wird bevorzugt auf 0,005 bis 1 µm eingestellt. Die Einstellung erfolgt wiederum durch die Auswahl der Korngröße des für die Folie verwendeten Keramikpulvers und die darauf abzustellenden Sinterbedingungen. Dabei kann zusätzlich mittels bekannter Maßnahmen ein unerwünschtes, diskontinuierliches Kornwachstum einzelner Körner der Folie während des Sintervorganges beeinflußt werden, zum Beispiel durch Zusatz von Kornwachstumhemmern wie MgO.

Die mittels Sintern erfolgende Verbindung der ein- oder mehrschichtigen Folie mit dem Trägerkörper erfolgt bei einer Temperatur von 700 bis 1550 °C während einer Haltezeit von 10 bis 120 min.

Sofern es erwünscht ist, kann auf der auf dem Stützkörper aufgebauten Folie noch eine Schutzschicht angeordnet werden. Die Schutzschicht wird vorteilhafterweise ebenfalls als Folie aus keramischem sinterfähigen Pulver über der eigentlichen Filtermembran im plastischen Zustand aufgebracht und dann gemeinsam mit dem Stützkörper und der Filtermembran versintert. Die Schutzschicht kann aber auch aus durchlässigem Kunststoffmaterial bestehen, das in einem zusätzlichen Arbeitsgang aufgebracht wird.

Zur Verdeutlichung des erfindungsgemäßen Verfahrens wird die Herstellung einer rohrförmigen Filtermembran mit innerem Stützkörper und außenliegender Membran in dem folgenden Beispiel beschrieben.

Beispiel:

Ein rohrförmiger Aluminiumoxidkörper mit einer Länge von 25 cm, einem Außendurchmesser von 10 mm und einer Wandstärke von 1,5 mm, besteht aus miteinander versinterten Aluminiumoxidkörnern mit einer mittleren Korngröße von 35 µm und weist eine Porosität von 20 % auf. Dieser rohrförmige Körper wird mit einer auf 50 µm dicken keramischen Gießfolie belegt, die sich wie folgt zusammensetzt:

60 %     reaktive Tonerde einer mittleren Korngröße von 1,2 µm
20 %     Trichloräthylen
7 %     Ethanol
5 %     Polyvinylalkohol
5 %     Dioctylphthalat
2,5 %     Polyäthylenglykol mit einem mittleren Molekulargewicht von 2000
0,5 %     Fischöl

Das mit der keramischen Gießfolie belegte Aluminiumoxid-Trägerrohr wird danach einer isostatischen Kompression unterzogen, um die Haftfestigkeit der Folie auf dem Trägerkörper vor dem eigentlichen Versinterungsvorgang zu verbessern. In einer sich anschließenden ersten Temperaturbehandlung bis 400 °C wird die Hauptmenge der organischen Bestandteile ausgeheizt. Der sich daran anschließende Sinterprozeß bei 1480 °C während einer Haltezeit von 2 h führt zum Versintern der reaktiven Tonerde mit dem rohrförmigen Körper und es bildet sich auf diesem eine Membranschicht mit einem mittleren Porendurchmesser von 0,8 µm aus.

**Patentansprüche**

1. Verfahren zur Herstellung eines keramischen Filterelementes, insbesondere Plattenfilter, Membranfilter oder Filterrohr, mit einem für sich gesinterten keramischen porösen Stützkörper und einer oder mehreren darauf angeordneten Keramischen Filterschichten, dadurch gekennzeichnet, daß der Stützkörper mit mindestens einer Folie aus sinterfähigem oxidischen oder nichtoxidischen Pulver und temporären Binder verbunden wird, anschließend zunächst der temporäre Binder ausgeheizt und dann die Folie mit dem Stützkörper mittels Sintern verbunden wird.

2. Verfahren nach Anspruch 1, dadurch gekennzeichnet, daß der Stützkörper aus einer Pulvermischung von 70 bis 90 Gew.% Schmelzkorund mit einer mittleren Korngröße von 10 bis 30 µm und 10 bis 30 Gew.% reaktiver Tonerde mit einer mittleren Korngröße von 0,5 bis 2 µm und einem organischen Versatz als temporärer Binder mittels Extrudieren oder anderen Formgebungsverfahren und anschließendem Sintern bei einer Temperatur von 1800 bis 2000 °C im Vakuum oder unter Schutzgasatmosphäre bei einer Haltezeit von 2 bis 8 h hergestellt wird.

3. Verfahren nach Anspruch 2, dadurch gekennzeichnet, daß die Porosität des Stützkörpers durch den Zusatz fester, ausbrennbarer organischer Substanzen und/oder Ammoniumkarbonat auf 25 bis 40 % eingestellt wird.

4. Verfahren nach Anspruch 2, dadurch gekennzeichnet, daß der Stützkörper zu einer Platte gepreßt oder zu einem Rohr extrudiert wird.

5. Verfahren nach Anspruch 1, dadurch gekennzeichnet, daß eine Folie aus sinterfähigem keramischen Pulver mit einer mittleren Korngröße von 0,01 bis 2 μm und einem organischen Versatz als temporären Binder mittels Gießen und/oder Auswalzen auf eine Foliendicke von 20 bis 200 μm hergestellt wird

6. Verfahren nach Anspruch 1, dadurch gekennzeichnet, daß eine Folie aus sinterfähigem keramischen Pulver, organischem Versatz als temporären Binder und natürlichen oder synthetischen Fasern nach der Papierherstellungstechnik und/oder Papierbeschichtungstechnik hergestellt wird.

7. Verfahren nach Anspruch 5, dadurch gekennzeichnet, daß als sinterfähiges keramisches Pulver ein Vorprodukt von reaktiver Tonerde, diese selbst, ZrO$_2$, MgO, SiO$_2$, Aluminiumtitanat, Mullit, Cordierit, Kaolin oder Mischungen daraus ausgewählt wird.

8. Verfahren nach Anspruch 1, dadurch gekennzeichnet, daß die Folie mittels Pressen mit einem plattenförmigen oder rohrförmigen gesinterten Stützkörper verbunden und anschließend bei einer Temperatur von 700 bis 1550 °C und einer Haltezeit von 10 bis 120 min versintert wird.

9. Verfahren nach Anspruch 1, dadurch gekennzeichnet, daß die Folie durch Befeuchten und/oder Erwärmen plastifiziert und dann mittels Umwickeln mit einem rohrförmigen gesinterten Stützkörper verbunden wird.

10. Verfahren nach Anspruch 1, dadurch gekennzeichnet, daß die Folie zunächst auf einen expandierbaren Dorn gewickelt, der Dorn mit der Folie in die rohrförmige Ausnehmung des Stützkörpers eingeführt wird, mittels Expandieren die Folie zunächst an der Innenwand abgelegt und anschließend durch Sintern mit dem Stützkörper mechanisch verbunden wird.

11. Verfahren nach Anspruch 8 bis 10, dadurch gekennzeichnet, daß die Folie unter Verwendung eines anorganischen oder organischen Klebers mit dem gesinterten Stützkörper verbunden wird.

12.Verfahren nach Anspruch 8 oder 9, dadurch gekennzeichnet, daß mehrere Folien aus keramischen Pulvern mit jeweils unterschiedlicher Korngröße mit dem Stützkörper verbunden werden, wobei die dem Stützkörper benachbarte Folie das Pulver mit der größeren Korngröße enthält.

13. Verfahren nach Anspruch 1, dadurch gekennzeichnet, daß die Porengröße der mit dem Stützkörper versinterten Folie durch den Zusatz von Kornwachstumshemmern auf 0,005 bis 1,0 μm eingestellt wird.

14. Verfahren nach Anspruch 1, dadurch gekennzeichnet, daß über der Folie oder den Folien eine Schutzschicht angeordnet wird.

## Claims

1. Process for the manufacture of a ceramic filter element, especially a plate filter, a membrane filter or a filtering tube, comprising an independently sintered ceramic porous supporting body and one or more ceramic filter layers arranged thereon, characterised in that the supporting body is joined to at least one sheet of sinterable oxidic or non-oxidic powder and temporary binder, subsequently first the temporary binder is removed by heating and then the sheet is bonded to the supporting body by means of sintering.

2. Process according to claim 1, characterised in that the supporting body is manufactured from a powder mixture of from 70 to 90 % by weight fused corundum having an average grain size of from 10 to 30 μm and from 10 to 30 % by weight reactive alumina having an average grain size of from 0,5 to 2 μm and an organic additive as temporary binder by means of extrusion or other shaping processes and subsequent sintering at a temperature of from 1800 to 2000°C in vacuo or under a protective gas atmosphere with a dwell time of from 2 to 8 hours.

3. Process according to claim 2, characterised in that the porosity of the supporting body is adjusted to from 25 to 40 % by the addition of solid, organic substances that can be removed by burning and/or of ammonium carbonate.

4. Process according to claim 2, characterised in that the supporting body is pressed to form a plate or is extruded to form a tube.

5. Process according to claim 1, characterised in that a sheet is manufactured from sinterable ceramic powder having an average grain size of from 0,01 to 2 μm and an organic additive as temporary binder by means of casting and/or rolling to a sheet thickness of from 20 to 200 μm.

6. Process according to claim 1, characerised in that a sheet is manufactured from sinterable ceramic powder, organic additive as temporary binder and natural or synthetic fibres according to the paper manufacturing technique and/or the paper coating technique.

7. Process according to claim 5, characterised in that there is selected as sinterable ceramic powder a precursor of reactive alumina, reactive alumina itself, ZrO$_2$, MgO, SiO$_2$, aluminium titanate, mullite, cordierite, kaolin or mixtures thereof.

8. Process according to claim 1, characterised in that the sheet is joined to a plate-shaped or tubular sintered body by pressing and is subsequently sintered at a temperature of from 700 to 1550°C and with a dwell time of from 10 to 120 minutes.

9. Process according to claim 1, characterised in that the sheet is plasticised by moistening and/or heating and is then joined to a tubular sintered supporting body by means of wrapping.

10. Process according to claim 1, characterised in that the sheet is first wrapped around an expansible mandrel, the mandrel together with the sheet is inserted into the tubular cavity of the supporting body, the sheet is first laid against the inner wall by expansion and is then mechanically bonded to the supporting body by sintering.

11. Process according to claims 8 to 10, characterised in that the sheet is bonded to the sintered supporting body using an inorganic or organic adhesive.

12. Process according to claim 8 or 9, characterised in that a plurality of sheets of ceramic powders each having a different grain size is bonded to the supporting body, the sheet adjacent to the supporting body containing the powder having the larger grain size.

13. Process according to claim 1, characterised in that the pore size of the sheet which is sintered to the supporting body is adjusted to from 0,005 to 1,0 µm by the addition of grain growth inhibitors.

14. Process according to claim 1, characterised in that a protective layer is arranged over the sheet or sheets.


## Revendications

1. Procédé de préparation d'un élément de filtre en céramique, en particulier de filtre à plaques, de filtre microporeux ou de tuyaux-filtre, comprenant un support en céramique poreux fritté avec, disposé dessus, un ou plusieurs couches filtrantes en céramique, caractérisé en ce que le support est relié à au moins une feuille constituée d'une poudre frittable à base d'un oxyde ou d'un composé autre qu'un oxyde et d'un liant temporaire, et qu'ensuite le liant temporaire est d'abord éliminé par chauffage et ensuite la feuille est liée au support par frittage.

2. Procédé selon la revendication 1, caractérisé en ce que le support est préparé à partir d'un mélange de poudre de 70 à 90 % en poids de corindon fondu avec une dimension moyenne des particules de 10 à 30 µm et de 10 à 30 % en poids d'alumine réactive, avec une dimension des particules de 0, 5 à 2 µm et d'une addition organique formant liant temporaire, par extrusion ou par un autre procédé de formage, suivi de frittage, à une température de 1800 à 2000°C sous vide ou dans un atmosphère de gaz protecteur, pendant une durée de 2 à 8 heures.

3. Procédé selon la revendication 2, caractérisé en ce que la porosité du support est réglée entre 25 et 40 %, par l'addition de substances organiques solides consumables par le feu et/ou de carbonate d'ammonium.

4. Procédé selon la revendication 2, caractérisé en que le support est pressé sous forme d'une plaque ou est extrudé sous forme d'un tuyau.

5. Procédé selon la revendication 1, caractérisé en que que l'on prépare une feuille à partir d'une poudre céramique frittable ayant une grosseur moyenne des particules de 0,01 à 2 µm et d'une addition organique formant liant temporaire, par coulée et/ou laminage pour obtenir une épaisseur de feuille de 20 à 200 µm.

6. Procédé selon la revendication 1, caractérisé en ce qu'on prépare une feuille à partir d'une poudre céramique frittable, d'une addition organique formant liant temporaire et de fibres naturelles ou synthétiques, cette préparation étant réalisée d'après la technique de fabrication du papier et/ou de la technique de revêtement du papier.

7. Procédé selon la revendication 5, caractérisé en que l'on choisit comme poudre céramique frittable un produit intermédiaire de l'alumine activée, l'alumine activée, $ZrO_2$, $MgO$, $SiO_2$, le titanate d'aluminium, la mullite, la cordierite, le koalin ou leurs mélanges.

8. Procédé selon la revendication 1, caractérisé en ce qu'on lie la feuille, au moyen de presses, à un support fritté, en forme de plaque ou en forme de tuyau, et qu'ensuite on fritte à une température de 700 à 1550°C pendant une durée de 10 à 120 mn.

9. Procédé selon la revendication 1, caractérisé en ce qu'on plastifie la feuille par mouillage et/ou chauffage et qu'ensuite on l'a lie à un support fritté en forme de tuyau, par enrobage.

10. Procédé selon la revendication 1, caractérisé en ce que la feuille est d'abord enroulée sur une broche expansible, qu'on introduit la broche avec la feuille dans le support en forme de tuyau, que la feuille est d'abord enlevée de la paroi intérieure par expansion et qu'ensuite elle est liée mécaniquement au support par frittage.

11. Procédé selon les revendications 8 à 10 caractérisées en ce que la feuille est liée au support fritté en utilisant une colle organique ou anorganique.

12. Procédé selon revendication 8 ou 9, caractérisé en ce qu'on lie au support plusieurs feuilles faites à partir de poudres céramiques ayant différentes dimensions de particules, la feuille la plus proche du support contenant de la poudre ayant les dimensions de particules les plus grosses.

13. Procédé selon la revendication 1, caractérisé en ce qu'on règle la grosseur des pores de la feuille reliée au support, de 0,05 à 1,0 µm par addition de substances ralentissant la croissance des particules.

14. Procédé selon la revendication 1, caractérisé en ce que l'on dispose sur la ou les feuille (s) une couche protectrice.